# EUROPEAN PATENT SPECIFICATION

(11) **EP 0 436 276 B1**
(45) Date of publication and mention of the grant of the patent: **11.01.1995**
(21) Application number: 90309184.1
(22) Date of filing: 22.08.1990
(51) Int. Cl.: G01C 19/66

(54) **Radio frequency excited lasers**
Laser mit Hochfrequenzanregung
Lasers avec excitation à haute fréquence

(30) Priority: 26.12.1989 US 456407
(43) Date of publication of application: 10.07.1991
(73) Proprietor: Litton Systems, Inc., Beverly Hills California 90210-9990 (US)
(72) Inventor: Hahn Tae, W., Chatsworth, CA. 91711 (US); Grover Bruce, C., Newbury Park CA. 91320 (US)
(74) Representative: Godsill, John Kenneth

(56) References cited:
- EP-A- 0 320 102
- FR-A- 2 593 650

## Description

The present invention relates to apparatus for applying a radio frequency signal to a laser.

The gain medium for a ring laser is usually a gas, and it often is a mixture of helium and neon gases. GB-A-2220098 teaches the use of a means for applying a radio frequency signal to a ring laser for exciting discharge of the gain medium. It is excited by wrapping a quarter wave coil, within a resonant cavity, around one leg of the ring laser gas conduit and delivering radio frequency energy to the coil.

U.S. Patent Application Serial Number 07/253,094, teaches combining a constant magnetic field, which is used for frequency splitting of beams in a multioscillator ring laser gyro, with a radio frequency excitation coil for delivering radio frequency energy to the ring laser gas in a gain region of the gas.

Make no assumption that the effects are linear. The effects produced by the two fields are different because of the large difference in frequency between the exciting fields causes their effects to be separated in frequency. The invention herein relates to the excitation apparatus.

The ring laser gyro apparatus usually needs to be a precise instrument. To that end, attempts are made to improve the accuracy. Any uncontrolled or unexpected change in physical conditions in the ring laser affects the precision of the gyro. One of the uncontrolled changes is the drift of the excitation region within a quarter wave excitation coil and along the gain bore of the ring laser.

When using a full wavelength or a half wavelength exciting coil, at the excitation radio frequency, to excite the ring laser, the excitation region experiences no drifts. However, when using such excitation coils, the bore wells attract contamination which reduces the life of the ring laser. In the apparatus of GB-A-2220098 and U.S. Patent Application Number 07/253,094, a quarter wavelength exciting coil, at the excitation radio frequency, is used to excite the laser, while avoiding accumulation of contamination. The excitation region excited by a quarter wave coil does drift slightly, and the precision of the gyro is affected by such drift.

According to the invention, there is provided apparatus for applying a radio frequency signal to a laser, having a laser cavity comprising a gain region containing a gain medium, to excite discharge of the gain medium, the apparatus comprising a source of radio frequency energy and a coil to be positioned around the gain region and having a length substantially a quarter wavelength at the frequency of said source of radio frequency energy, characterised in that there is provided a second coil to be positioned around the gain region and having a longitudinal axis substantially aligned with that of said first coil, said second coil having a length substantially a quarter wavelength at the frequency of said source of radio frequency energy, adjacent ends of said two coils being closely spaced in a predetermined position along said axis, at least one of said coils being connected to receive radio frequency energy from said source of radio frequency energy, said coils being arranged and driven such that a high electric field gradient is produced between their adjacent ends.

Instead of one substantially quarterwave excitation coil, this invention uses two adjacent quarterwave excitation coils, each preferably substantially a quarter wavelength at the excitation frequency, in the gain region of the gyro. The two excitation coils are wound and excited, substantially at resonance, to cause the electric gradient in the specific region within the laser bore between the adjacent ends of the coils to jump stepwise from one polarity to the opposite polarity, and that steep gradient stabilizes the position of the excitation region in the gain bore.

To cause the electric field to jump, the two excitation coils are either driven oppositely in phase or one of the two coils is inductively driven from the other coil. While the coils are preferably wound oppositely about the gain bore, they operate satisfactorily when wound in the same direction. The produced electric fields within the gain bore are of opposite polarities.

In one embodiment of the invention, both coils are actively driven from a radio frequency driving source. In another embodiment, only one of the two coils is driven from the radio frequency driving source, but the inductive coupling between the coils causes the second coil to produce the jump in electric field polarity.

It can be seen that certain embodiments of the invention can be so designed as to:
stabilize the position of the excitation region of an electromagnetically driven laser, which uses substantially quarter wavelength coils surrounding such bore, within a gaseous medium;
stabilize such region wherein said gaseous medium is within a laser gain bore;
stabilize such region in the gain bore of a ring laser;
stabilize such region in a ring laser gyro multioscillator, and particularly wherein the laser path is non-planar; and/or
to excite a ring laser using at least two adjacent substantially quarter wavelength radio frequency coils, positioned around the gain bore of the ring laser and driven substantially at resonance.

For a better understanding of the present invention and as to how the same may be carried into effect, reference will now be made by way of example to the accompanying drawings in which:
Figure 1 is a plan view of a ring laser with the position of the exciting magnets shown;
Figure 2 is a view, taken from the top of Figure 1;
Figure 3 is a partly diagrammatic broken-away view of a preferred embodiment of the invention in which both coils are driven in phase opposition;
Figure 4 is a partly diagrammatic broken-away view of an alternative form of the invention in which the second excitation coil is excited from a first excitation coil.

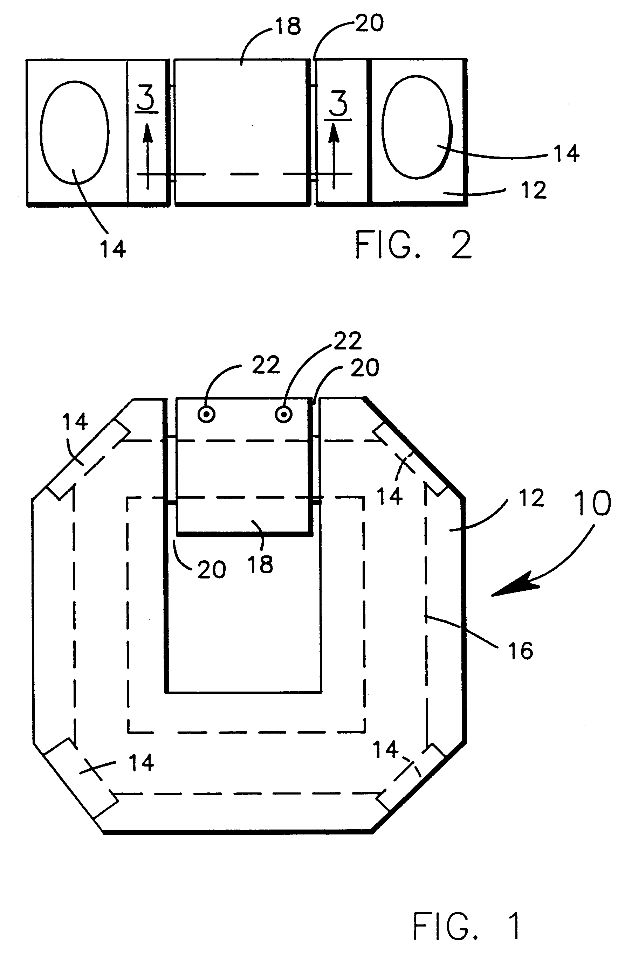

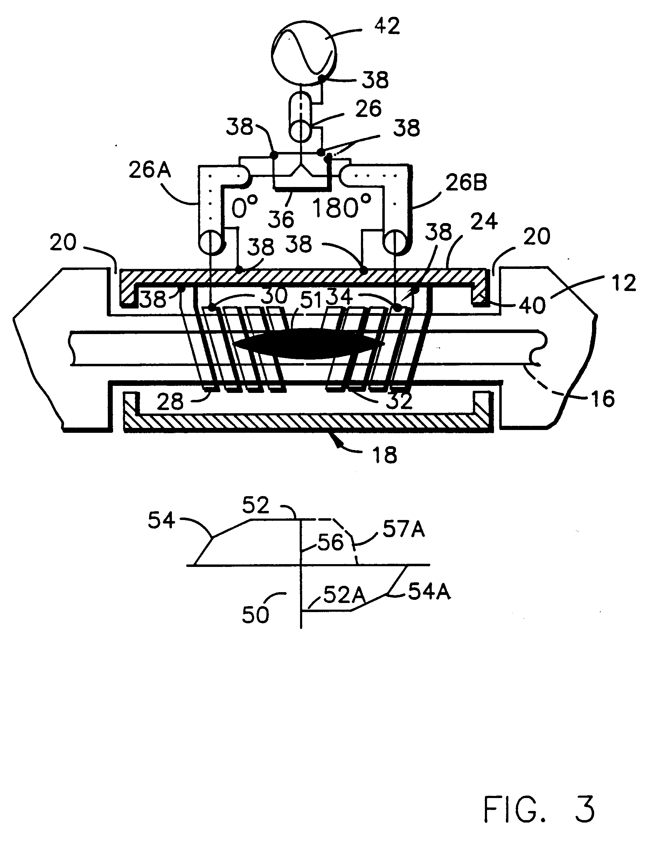

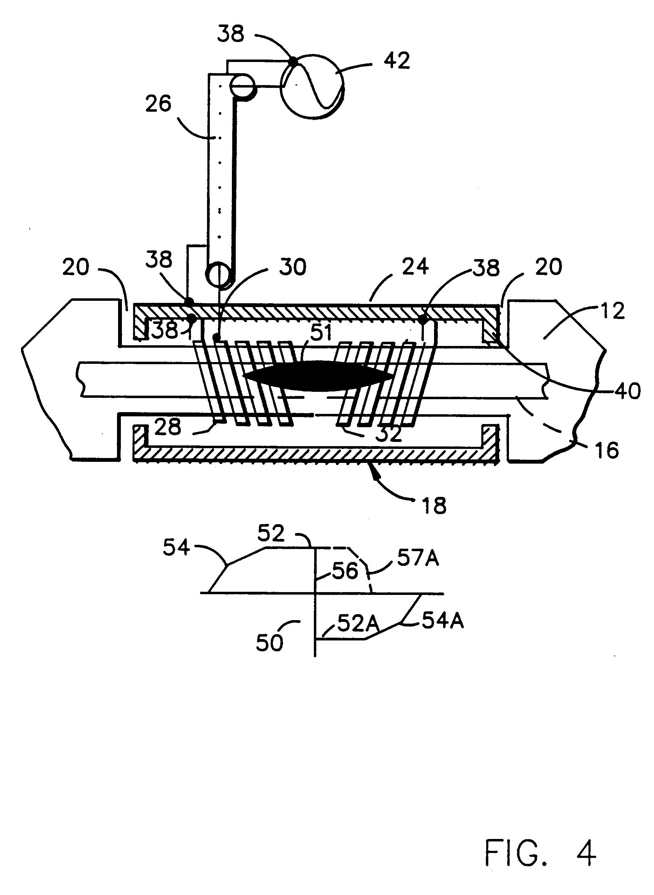

In Figures 1 and 2, a ring laser 20 is embedded in a solid block 12 with corner mirrors 14 forming the laser path within the laser bore 16. One leg of the bore 16, called the gain region, is enclosed by the two coils which are preferably in an electrically shielded housing 18. In the embodiment of Figure 3, two ports 22 (shown in Fig. 1) in the housing 18 receive radio frequency energy. In the embodiment of Figure 4 there is only one port 22. Preferably the housing 18 is spaced apart at 20 from the remainder of the housing 12, and made of electrically conductive material.

Figures 3 and 4 are views, taken at 3-3 of Figure 2, of the substantially quarter wave coils 28 and 32 within the housing 18, their position, and their electrical connection.

In Figure 3, coils 28 and 32 are driven in phase opposition from a radio frequency source 42 through a coaxial line 26, thence through a signal splitter and phase inverter 36, thence through coaxial lines 26A and 26B, respectively.

Oppositely driven coils 28 and 32 are preferably, but not necessarily, oppositely wound to produce oppositely poled electromagnetic fields in the region 51 of the bore 16 at the radio frequency of source 42.

The distal ends of the quarterwave coils 28 and 32 are grounded. The windings are further characterized by the two quarterwave coils 28 and 32 being fed opposite in phase from opposite ends at taps 30 and 34. The positions of taps 30 and 34 are chosen to match the impedance of the transmission lines 26A and 26B.

The electric field within the bore 16 migrates to a position of maximum electric field gradient. Plots of the electric field intensity as a function of position along the bore are shown at 50.

Without the second coil, the electrical field intensity plot would follow the curve 54-52-57A, and the position of the region 51 would either be at 54 or 57A. However, with the two oppositely poled coils, the field intensity follows the curve 54-52-56-52A-54A. Note that the maximum gradient always occurs at 56, and the excitation region 51 is anchored in position at 56. The position of the region 51 contributes to the increased accuracy of the ring laser gyro.

The apparatus of Figure 4 differs from that of Figure 3. Only the coil 28 is excited by the radio frequency source 42. Voltage is induced from coil 28 into coil 32, and the radio frequency electric field 52A-54A is produced in the region 51 of the bore 16.

Either embodiment may be used with equal effect in holding the position of the gain region 51.

It would be obvious to those skilled in the art that the embodiments shown may be varied. The electric shield 18 contributes to the directing or focusing of the electric portion of the electro-magnetic field into the desired region of the laser gas. The apparatus should not be limited to a ring laser with exactly four branches. For example, some ring laser gyros use a three branched ring laser, and the gain bore is one of the branches. The invention is not limited to ring lasers, for linear lasers may also be energized in this fashion. Likewise, there may be other instances wherein it is desired to position a high intensity electric component of a radio frequency field using substantially quarterwave coils. This invention can be used in apparatus whether the apparatus uses a gas or not in the region of high intensity electric component of the radio frequency wave.

To recapitulate, where a substantially quarterwave coil is driven to produce a high intensity electric component of a radio frequency wave in a predetermined position, the use is contemplated of another adjacent substantially quarterwave coil which is driven in phase opposition to the adjacent coil or which receives its energy from the first coil to produce a large gradient in the desired region of the adjacent ends of the two coils to stabilize the position of the intense electric component of the electromagnetic wave.

## Claims

1. Apparatus for applying a radio frequency signal to a laser, having a laser cavity comprising a gain region containing a gain medium, to excite discharge of the gain medium, the apparatus comprising a source (42) of radio frequency energy and a coil (28) to be positioned around the gain region and having a length substantially a quarter wavelength at the frequency of said source (42) of radio frequency energy, characterised in that there is provided a second coil (32) to be positioned around the gain region and having a longitudinal axis substantially aligned with that of said first coil (28), said second coil (32) having a length substantially a quarter wavelength at the frequency of said source (42) of radio frequency energy, adjacent ends of said two coils (28, 32) being closely spaced in a predetermined position along said axis, at least one of said coils (28, 32) being connected to receive radio frequency energy from said source (42) of radio frequency energy, said coils (28, 32) being arranged and driven such that a high electrical field gradient is produced between their adjacent ends.

2. Apparatus as claimed in claim 1, wherein radio frequency energy is delivered from said radio frequency source (42) to said coils (28, 32) to cause said coils to produce electric fields which are in phase opposition near the adjacent ends of said two coils (28, 32).

3. Apparatus as claimed in claim 2, wherein radio frequency energy is delivered in phase opposition by two transmission lines (26A, 26B) to taps (30,34) which are positioned on respective coils (28,32) to cause the impedances of said coils at said taps (30,34) to match the impedances of the transmission lines (26A,26B), and signals in said coils (28,32) are in phase opposition to produce a high electrical field gradient between the adjacent ends of said coils.

4. Apparatus as claimed in claim 2, wherein radio frequency energy is delivered by transmission line (26) to a tap (30) positioned on one of said coils (28) to cause the impedance of said coil (28) at said tap (30) to match the impedance of said transmission line (26), and signals induced from said tapped coil (28) into said other said coil (32) are in phase opposition to produce a high electrical field gradient between the adjacent ends of said coils (28,32).

5. Apparatus as claimed in any one of claims 1 to 4 and further comprising an electric shield (18) surrounding said coils.

6. A laser, comprising a laser cavity having a gain region containing a gain medium, in combination with apparatus as claimed in any one of claims 1 to 5 with said coils arranged around the gain region.

7. A ring laser gyro (20) comprising a ring laser housing (18), at least three mirrors (14) defining a closed ring laser path, a bore (16) in said housing having branches between adjacent mirrors, at least one of said branches constituting a gain region of said bore, a laser gas within said bore, and an apparatus according to any one of claims 1 to 5, wherein said first and second coils (28, 32) of said apparatus are arranged around the gain region of the bore.

## Patentansprüche

1. Vorrichtung zum Anlegen eines Hochfrequenzsignals an einen Laser, der einen Laserhohlraum aufweist und einen Verstärkungsbereich, der ein Verstärkungsmedium enthält, umfaßt, um die Entladung des Verstärkungsmediums anzuregen, wobei die Vorrichtung eine Hochfrequenzenergiequelle (42) und eine Spule (28) umfaßt, die um den Verstärkungsbereich herum anzuordnen ist und eine Länge von im wesentlichen einer Viertelwellenlänge bei der Frequenz der genannten der Hochfrequenzenergiequelle (42) hat, **dadurch gekennzeichnet**, daß eine zweite Spule (32) vorgesehen ist, die um den Verstärkungsbereich herum anzuordnen ist und eine im wesentlichen zu derjenigen der ersten Spule (28) ausgerichtete Längsachse hat, die genannte zweite Spule (32) eine Länge von im wesentlichen einer Viertelwellenlänge bei der Frequenz der genannten von Hochfrequenzenergiequelle (42) hat, die benachbarten Enden der genannten zwei Spulen (28, 32) eng in einer vorbestimmten Position entlang der genannten Achse beabstandet sind, wenigstens eine der genannten Spulen (28, 32) verbunden ist, Hochfrequenzenergie von der genannten Hochfrequenzenergiequelle (42) zu erhalten, die genannten Spulen (28, 32) angeordnet sind und angesteuert werden, daß ein hoher elektrischer Feldgradient zwischen ihren benachbarten Enden erzeugt wird.

2. Vorrichtung wie in Anspruch 1 beansprucht, in der die Hochfrequenzenergie von der genannten Hochfrequenzquelle (42) zu den genannten Spulen (28, 32) geliefert wird, damit die genannten Spulen elektrische Felder erzeugen, die sich nahe den benachbarten Enden der genannten zwei Spulen (28, 32) in entgegengesetzter Phase befinden.

3. Vorrichtung, wie in Anspruch 2 beansprucht, in der Hochfrequenzenergie in entgegengesetzter Phase durch zwei Übertragungsleitungen (26A, 26B) zu Abgriffen (30, 34) geliefert wird, die an den jeweiligen Spulen (28, 32) positioniert sind, damit die Impedanzen der genannten Spulen an den genannten Abgriffen (30, 34) den Impedanzen der Übertragungsleitungen (26A, 26B) angepaßt sind, und die Signale in den genannten Spulen (28, 32) in entgegengesetzter Phase sind, um einen großen elektrischen Feldgradienten zwischen den benachbarten Enden der genannten Spulen zu erzeugen.

4. Vorrichtung, wie in Anspruch 2 beansprucht, in der Hochfrequenzenergie durch eine Übertragungsleitung (26) einem Abgriff (30) zugeführt wird, der an einem Ende der genannten Spulen (28) positioniert ist, damit die Impedanz der genannten Spule (28) bei dem genannten Abgriff (30) der Impedanz der genannten Übertragungsleitung (26) angepaßt ist, und Signale, die von der genannten Spule (28) mit Abgriff in der genannten anderen Spule (32) induziert werden, eine entgegengesetzte Phase haben, um einen großen, elektrischen Feldgradienten zwischen den benachbarten Enden der genannten Spulen (28, 32) zu erzeugen.

5. Vorrichtung, wie in irgendeinem der Ansprüche 1 bis 4 beansprucht, und die ferner eine elektrische Abschirmung (18) umfaßt, die die genannten Spulen umgibt.

6. Ein Laser, umfassend einen Laserhohlraum, der einen ein Verstärkungsmedium enthaltenden Verstärkungsbereich hat, in Kombination mit der Vorrichtung, wie sie in irgendeinem der Ansprüche 1 bis 5 beansprucht wird, wobei die genannten Spulen um den Verstärkungsbereich herum angeordnet sind.

7. Ein Ringlaser-Kreisel (20), der ein Ringlasergehäuse (18), wenigstens drei Spiegel (14), die einen geschlossenen Ringlaserweg festlegen, eine Bohrung (16) in dem genannten Gehäuse, das zwischen benachbarten Spiegeln Arme hat, wobei wenigstens einer der genannten Arme einen Verstärkungsbereich der genannten Bohrung bildet, ein Lasergas innerhalb der genannten Bohrung und eine Vorrichtung gemäß irgendeinem der Ansprüche 1 bis 5 umfaßt, wobei die genannte erste und zweite Spule (28, 32) der genannten Vorrichtung um den Verstärkungsbereich der Bohrung herum angeordnet sind.

## Revendications

1. Dispositif pour appliquer un signal radiofréquence à un laser, comportant une cavité laser qui comprend une région amplificatrice contenant un milieu amplificateur, dans le but d'exciter une décharge dans le milieu amplificateur, ce dispositif comprenant une source (42) d'énergie radiofréquence et une bobine (28) qui est destinée à être placée autour de la région amplificatrice et qui a une longueur pratiquement égale à un quart de longueur d'onde à la fréquence de la source (42) d'énergie radiofréquence, caractérisé en ce qu'il comporte une seconde bobine (32) qui est destinée à être placée autour de la région amplificatrice et qui a un axe longitudinal pratiquement aligné avec celui de la première bobine (28), cette seconde bobine (32) ayant une longueur pratiquement égale à un quart de la longueur d'onde à la fréquence de la source (42) d'énergie radiofréquence, des extrémités adjacentes des deux bobines (28, 32) étant séparées d'une très faible distance dans une position prédéterminée le long de l'axe précité, l'une au moins des bobines (28, 32) étant connectée de façon à recevoir de l'énergie radiofréquence à partir de la source (42) d'énergie radiofréquence, et les bobines (28, 32) étant disposées et attaquées d'une manière telle qu'un gradient de champ électrique élevé soit produit entre leurs extrémités adjacentes.

2. Dispositif selon la revendication 1, dans lequel l'énergie radiofréquence est fournie aux bobines (28, 32) par la source radiofréquence (42) pour faire en sorte que les bobines produisent des champs électriques qui sont en opposition de phase au voisinage des extrémités adjacentes des deux bobines (28, 32).

3. Dispositif selon la revendication 2, dans lequel l'énergie radiofréquence est fournie en opposition de phase par deux lignes de transmission (26A, 26B) à des prises (30, 34) qui sont positionnées sur les bobines respectives (28, 32) pour faire en sorte que les impédances de ces bobines au niveau des prises (30, 34) soient adaptées aux impédances des lignes de transmission (26A, 26B), et les signaux dans les bobines (28, 32) sont en opposition de phase pour produire un gradient de champ électrique élevé entre les extrémités adjacentes des bobines.

4. Dispositif selon la revendication 2, dans lequel l'énergie radiofréquence est fournie par la ligne de transmission (26) à une prise (30) qui est positionnée sur l'une des bobines (28) pour faire en sorte que l'impédance de cette bobine (28) au niveau de la prise (30) soit adaptée à l'impédance de la ligne de transmission (26), et les signaux qui sont induits dans l'autre bobine (32), à partir de la bobine (28) munie de la prise, sont en opposition de phase pour produire un gradient de champ électrique élevé entre les extrémités adjacentes des bobines (28, 32).

5. Dispositif selon l'une quelconque des revendications 1 à 4 et comprenant en outre un blindage électrique (18) qui entoure les bobines.

6. Un laser, comprenant une cavité laser ayant une région amplificatrice qui contient un milieu amplificateur, en combinaison avec le dispositif selon l'une quelconque des revendications 1 à 5, dans lequel les bobines sont disposées autour de la région amplificatrice.

7. Un gyrolaser en anneau (20) comprenant un bloc de laser en anneau (18), au moins trois miroirs (14) définissant un chemin de laser en anneau fermé, un conduit (16) dans le bloc ayant des branches qui s'étendent entre des miroirs adjacents, l'une au moins de ces branches constituant une région amplificatrice du conduit, un gaz laser à l'intérieur du conduit, et un dispositif selon l'une quelconque des revendications 1 à 5, dans lequel les première et seconde bobines (28, 32) du dispositif sont disposées autour de la région amplificatrice du conduit.
